# EUROPEAN PATENT SPECIFICATION

(11) **EP 4 183 988 B1**
(45) Date of publication and mention of the grant of the patent: **09.04.2025**
(21) Application number: 22207458.5
(22) Date of filing: 15.11.2022
(51) Int. Cl.: F01N 3/20, F01N 13/00

(54) **EXHAUST GAS TREATMENT SYSTEM WITH MIXER**
ABGASBEHANDLUNGSSYSTEM MIT MISCHER
SYSTÈME DE TRAITEMENT DES GAZ D'ÉCHAPPEMENT AVEC MÉLANGEUR

(30) Priority: 17.11.2021 IT 202100029141
(43) Date of publication of application: 24.05.2023
(73) Proprietor: FPT Industrial S.p.A., 10156 Torino (IT)
(72) Inventor: INGHILTERRA, Giuseppe, 10156 TORINO (IT); DAMIANI, Gemma, 10156 TORINO (IT); VARGIU, Luca, 10156 TORINO (IT); CADAMURO, Alessandro, 10156 TORINO (IT)
(74) Representative: Studio Torta S.p.A.

(56) References cited:
- EP-A1- 2 984 308
- WO-A1-2017/215459
- DE-A1- 102017 113 357

## Description

### TECHNICAL FIELD

The present invention relates to a mixer of an after-treatment system for a vehicle, in particular a vehicle exhaust after-treatment system.

### STATE OF THE PRIOR ART

Diesel vehicles need to treat exhaust gases from the engine before they are released into the environment in order to reduce the level of pollutants such as nitrogen oxides or particulate matter.

This treatment is known to be carried out by using exhaust after-treatment systems, also known as After Treatment Systems (ATS), comprising a number of elements such as a Diesel Exhaust Fluid (DEF) solution such as AdBlue^{®}, Diesel Oxidation Catalysts (DOC), Urea Injection Module, Diesel Particulate Filters (DPF), or Selective Catalytic Reduction (SCR); the latter may include multiple intermediate elements such as Selective Catalytic Reduction on Filter (SCRoF) and Clean Up Catalyst (SCR-CUC).

In these systems it is essential to provide for a proper mixing between urea (injected via dosing modules) and the exhaust gas flow leaving the DOC module before it passes into the SCR in order to generate a gas mixture that allows the chemical reactions of reduction of nitrogen oxides contained in the exhaust gas to take place correctly. In particular, high ammonia uniformity indices (so-called NH3 uniformity indices, NH3 UI) must be provided.

The above-described mixing of DEF and exhaust gas is known to be achieved by providing after-treatment systems which have a large linear extension and in which the DEF injection module comprises a tilted dosing module that injects the DEF solution into a long mixing duct. This duct is long in order to provide a volume large enough to ensure proper mixing of the exhaust gases with the DEF solution. However, such a long duct increases the size of the ATS in the vehicle.

Alternatively, it is well known to provide dosing modules comprising blade or swirl mixers configured to generate particular swirling motions that help to mix the urea with the exhaust gas flow. Clearly, these designs are particularly expensive and increase pressure drops in the after-treatment system, reducing the engine system performance.

In all of the above solutions, it is essential that the DEF urea solution is correctly mixed into the exhaust gas, otherwise the urea may crystallize on the inner walls of the ATS duct; this drawback is due to the fact that the injected urea is at room temperature, i.e., approximately 25 °C, while the exhaust gases are at a temperature of at least 300 °C.

In view of the above, it is essential to avoid excessive temperature loss in the mixing module because, firstly, the efficiency of the chemical reduction reactions is reduced, and secondly, the possibility of formation of ammonia crystals at high temperature is reduced.

There is therefore a need to provide a mixing system for an ATS system, which allows proper mixing of the DEF with the exhaust gas flow, thus preventing the formation of deposits, is compact, and does not increase manufacturing costs as well as the pressure drop between the inlet and the outlet of the ATS compared to the known systems.

Example of mixing systems for an ATS system are disclosed in published documents WO2017215459 A1, EP2984308 A1 or DE102017113357 A1.

The object of the present invention is to meet the above requirements in an optimized and cost-effective manner.

### SUMMARY OF THE INVENTION

Said object is achieved by means of a mixer and an ATS system comprising said mixer as claimed in the appended claims.

### BRIEF DESCRIPTION OF THE DRAWINGS

For a better understanding of the present invention, a preferred embodiment is described below by way of nonlimiting example and with reference to the accompanying drawings, wherein:
- Figure 1 is a perspective view of a mixer of an ATS system according to the invention;
- Figure 2 is an exploded perspective view of the mixer in Figure 1;
- Figure 3 is a perspective, partially sectional view of the mixer in Figure 1; and
- Figure 4 is a perspective sectional view of the mixer in Figure 1.

### DETAILED DESCRIPTION OF THE INVENTION

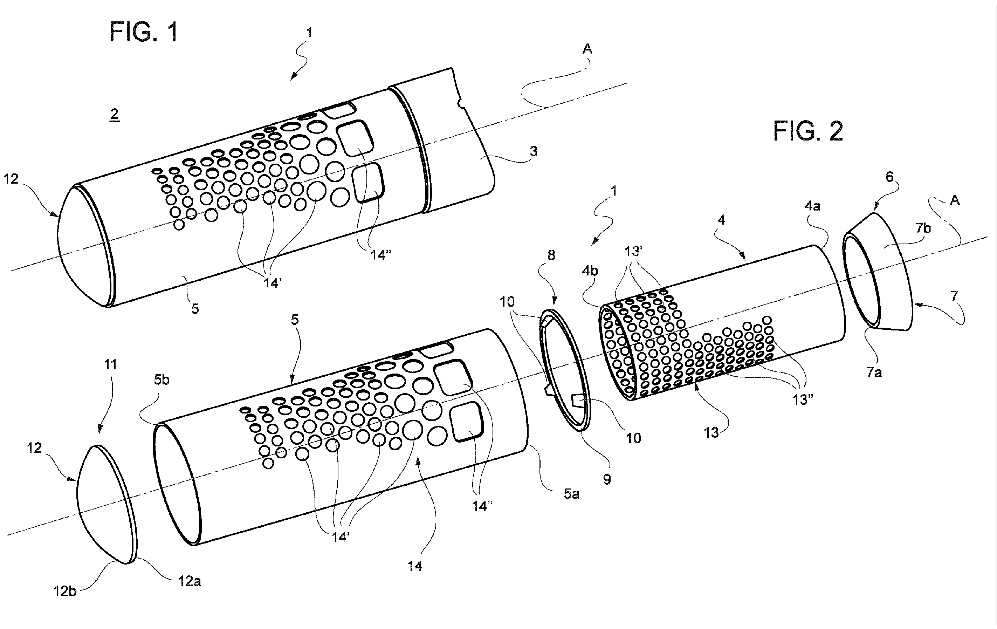

Figures 1 and 2 show a mixer 1 for an After Treatment Systems (ATS) (not shown in its entirety). Although not illustrated in detail for the sake of brevity, the mixer 1 is housed in a space 2 defined by the ATS system.

In particular, said space 2 is part of a Selective Catalytic Reduction (SCR) module; optionally, the SCR filter elements can be placed radially around the mixer 1 in said space 2 or axially with respect to the mixer 1 in the space 2.

In particular, the mixer 1 is placed downstream of a module (not shown) for the injection of a solution of urea (also known as Diesel Exhaust fluid, in short DEF) with the vehicular exhaust gas flow, preferably connected to an end portion of a duct (not shown).

In particular, the mixer 1 comprises an internal tubular element 4 configured to be fluidically and directly in series with a duct (not shown), and an external tubular element 5 configured to house the external tubular element 4 and be fluidically connected to said duct in series with the internal tubular element 4.

The internal and external tubular elements 4, 5 have an axisymmetric shape with respect to a longitudinal axis A and are both advantageously cylindrical in shape.

Preferably, the external tubular element 5 defines an end portion 3 with a diameter sized to cooperate in contact with the aforementioned duct so as to be integral therewith.

The internal tubular element 4 has a diameter smaller than the diameter of the external tubular element 5 so that it is housed radially and longitudinally inside it. Furthermore, hence, the internal tubular element 4 has a smaller diameter than the exhaust gas inlet duct.

The mixer 1 comprises a connecting element 6 configured to connect and join the internal tubular element 4 to the external tubular element 5.

In particular, the connecting element 6 comprises a conical ring 7 defining an inner radial edge 7a, of a smaller diameter, sized to cooperate in contact with a first terminal edge 4a of the internal tubular element 4, and an outer radial edge 7b, of a larger diameter, sized to cooperate in contact with the inner radial surface of the external tubular element 5, in particular in proximity to a first terminal edge 5a in the longitudinal direction along the axis A.

In particular, the inner radial edge 7a is configured to be welded on the first terminal edge 4a of the internal tubular element 4, while the outer radial edge 7b is configured to be planted inside the external tubular element 5.

The mixer 1 also includes a spacer element 8 configured to keep the internal tubular element 4 and the external tubular element 5 coaxial with each other.

In particular, the spacer element 8 comprises a ring 9 placed radially between the internal tubular element 4 and the external tubular element 5, optionally with a radial preload between them.

In particular, the ring 9 is in contact with the external tubular element 5 and sized to leave a gap with respect to the internal tubular element 4, and the radial preload is provided by a plurality of bosses 10, e.g., three bosses evenly spaced from one another, extending from the ring 9 in contact with the surface of the internal tubular element 4.

Preferably, as shown, the ring 9 is placed in proximity to a second terminal edge 4b of the internal tubular element 4 facing a second terminal edge 5b of the external tubular element 5.

The mixer 1 further comprises a terminal element 11 configured to be coupled to the second terminal edge 5b of the external tubular element 5 to prevent its communication with the space 2.

In particular, the terminal element 11 is a lid 12 provided with a radial portion 12a configured to cooperate in contact with the external tubular element 5, advantageously with its inner radial surface, for fastening the lid 12 thereto, and a shaped portion 12b extending from the radial portion 12a externally with respect to the space delimited by the external tubular element 5.

Preferably, as shown, the shaped portion 12b has a concave shape facing the external tubular element 5 and more preferably a spherical sector, where even more preferably the centre of curvature belongs to the axis A.

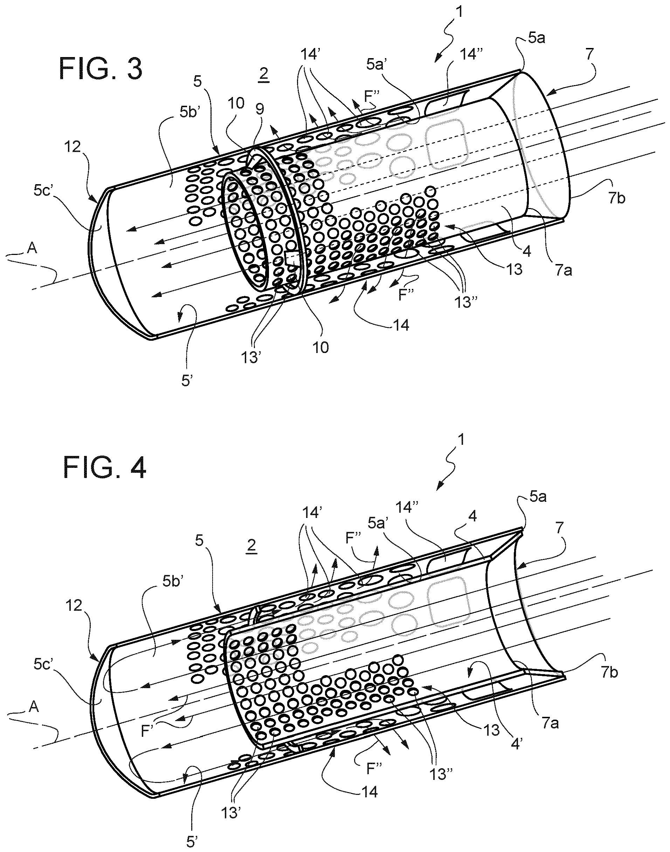

As a result of the above description, referring to Figures 3 and 4, the internal tubular element 4 delimits a space 4' fluidically directly in contact with the exhaust gas inlet duct, whereas the external tubular element delimits a space 5' which can be divided as follows:
- a first portion 5a' having an annular shape and radially delimited between the internal and external tubular elements 4, 5;
- a second portion 5b' having a cylindrical shape and radially only consisting of the external tubular element 5 and longitudinally comprised between the second terminal edges 4b, 5b; and
- a third portion 5c' having a designed shape, in the case described herein a hemispherical shape radially delimited by the lid 12.

Both the internal tubular element 4 and the external tubular element 5 each define a plurality of openings 13, 14 configured to allow fluid communication between the internal tubular element 4 and the first portion 5a' and between the external tubular element 5 and the space 2, and thus with the SCR.

In particular, the internal tubular element 4 defines a first plurality of openings 13' and a second plurality of openings 13". Preferably, both pluralities of openings 13', 13" are circular in shape and have the same diameter.

In greater detail, the first plurality of openings 13' is located close to the second terminal edge 4b, and preferably the spacer element 8 is longitudinally interposed on said first plurality of openings 13'.

In particular, the first plurality of openings 13' extends circumferentially at 360° with respect to the axis A, i.e., over the entire circumferential extension of the internal tubular element 4.

The second plurality of openings 13" extends from the first plurality of openings 13' towards the first terminal edge 4a. In particular, the second plurality of openings 13" extends up to a distance from the first terminal edge 4a substantially equal to the longitudinal extension of the first plurality of openings 13'.

The second plurality of openings 13" only extends over a circumferential portion of the internal tubular element 4, advantageously over two axially opposite portions. In particular, the second plurality of openings 13" extends over an angular sector of approximately 90°.

Both pluralities of openings 13', 13" are circumferentially aligned, i.e., the centres of the openings are comprised by circumferences which are advantageously equally spaced along the longitudinal axis A. Moreover, the openings of both pluralities of openings 13', 13" are circumferentially equally spaced from each other.

The external tubular element 5 also defines a first plurality of openings 14' and a second plurality of openings 14". In particular, both pluralities of openings 14', 14" only extend over a circumferential portion of the external tubular element 5, advantageously over two axially opposite portions. In particular, these pluralities of openings 14', 14" extend over an angular sector of approximately 90° offset with respect to the second plurality of openings 13" of the internal tubular element 4, i.e., so that these openings do not intersect with each other in the radial direction.

In particular, the first and second pluralities of openings 14', 14'' extend along the external tubular element 5 between the longitudinal positions of the first and second inner terminal edges 4a, 4b of the internal annular element 4. Therefore, the first and second inner terminal edges 5a, 5b are spaced from the first and second pluralities of openings 14', 14'' by a space without openings.

In greater detail, the first plurality of openings 14' extends further in the longitudinal direction than the second plurality of openings 14" and faces the second terminal edge 5b. In particular, these openings 14' are circular in shape and have a variable diameter which increases in size moving away from the second terminal edge 5b. In particular, the openings furthest away from this edge have a diameter which may be twice as large as those closest to it.

The first plurality of openings 14' comprises openings which are circumferentially aligned, i.e., the centres of the openings are comprised by circumferences spaced apart from each other. This distance advantageously increases moving away from the second terminal edge 5b.

Furthermore, the circumferential extension of the openings of the first plurality of openings 14' in the circumferential direction increases moving away from the second terminal edge 5b. Circumferentially, the openings of the first plurality of openings 14' are equally spaced from each other.

The second plurality of openings 14" comprises openings with larger opening section and circular extension than the previous openings of the first plurality of openings 14'. Advantageously, these openings are quadrangular, advantageously rectangular in section and are circumferentially equally spaced from each other.

The operation of the above-described embodiment of the mixer 1 according to the invention is as follows.

As shown in Figure 3, the DEF mixture from the exhaust gas duct flows into the space 4' parallel to the axis A towards the lid 12. On the other hand, a main flow portion F' of the DEF mixture flows directly into the second portion 5b', whereas a bypass flow portion F" flows from the second and first pluralities of openings 14", 14' towards the first portion 5a' of the space 5'.

As shown in Figure 4, the main flow portion F' passes into the third portion 5c' of the space 5', impacting against the shaped surface of the lid 12 and reversing its motion by 180° close to its radial portion 12a, heading towards the first portion 5a' of the space 5'.

Here, the main flow portion F' mixes with the bypass flow portion F" and exits the first and second pluralities of openings 14', 14", according to their passage section. Once it has flowed into the space 2, the flow continues through the SCR filters allowing the known chemical reduction reactions.

The advantages of a mixer for an ATS system according to the invention are clear from the foregoing.

The mixer 1 allows high mixing indices for the urea solution in a compact space.

In particular, the labyrinth path provided to the DEF flow, which is divided into a main portion and a bypass portion that mix together at two different stages, allows adequate mixing of the DEF flow while preventing high pressure drops.

The use of two cylindrical tubular elements makes it possible to use particularly inexpensive and robust elements.

In addition, the labyrinth path provided and the use of calibrated and angularly offset holes between the internal and external tubular elements make it possible to obtain an extremely compact device.

The deflector element 7 also makes it possible to give a first acceleration to the flow entering the internal tubular element 4, preventing its direct passage through the portion 5a' of space from the external tubular element.

The sphere-sector shape of the lid 12 also allows a 180° change in direction of the DEF flow without excessive turbulence, while maintaining a high mixing flow speed in the portion 5a' of space.

Lastly, it is clear that modifications and variations may be made to the mixer for an ATS system according to the present invention, without however departing from the scope of protection defined by the claims.

For example, the number and shape of the openings may vary depending on the size of the ATS system, as well as the shape of the lid or of the connecting element.

## Claims

1. An exhaust gas after-treatment system, ATS, defining a space (2) facing an operating module of said after-treatment system and housing an end portion of a duct, and a module for the injection of a solution of urea into said duct upstream of said space (2), said ATS system comprising a mixer (1) housed within said space (2) and connected to said duct, said mixer (1) housing a mixer (1) according to one of the preceding claims, connected to said duct, said mixer (1) comprising an internal tubular element (4) and an external tubular element (5) extending along a longitudinal axis (A), said external tubular element (5) being sized to delimit a space (5') suitable for housing said internal tubular element (4),
said external tubular element (5) comprising a first edge (5a) configured to cooperate in contact with an end portion of said duct and a second edge (5b) opposite to the first along said longitudinal axis (A) configured to separate said space (5') delimited by said external tubular element (5) from said space (2),
**characterized in that** said mixer (1) comprises a connecting element (6) configured to cooperate in contact with said external tubular element (5) and a first edge (4a) of said internal tubular element (4) to allow direct fluid communication only between one space (4') delimited by said internal tubular element (4) and said duct,
said internal tubular element (4) defining a plurality of openings (13) configured to allow fluid communication between said space (4') of said internal tubular element (4) and a portion (5a') of said space (5'),
said external tubular element (5) defining a plurality of openings (14) configured to allow fluid communication between said portion (5a') of said space (5') and said space (2).

2. ATS according to claim 1, wherein said internal tubular element (4) and said external tubular element (5) are coaxial along said longitudinal axis (A).

3. ATS according to one of claims 1 or 2, wherein said internal tubular element (4) and said external tubular element (5) are cylindrical.

4. ATS according to one of claims 1 to 3, wherein said connecting element (6) comprises a conical ring (7).

5. ATS according to one of the preceding claims, further comprising a spacer element (8) configured to keep said internal tubular element (4) and said external tubular element (5) radially separated.

6. ATS according to claim 5, wherein said spacer element (8) comprises a ring (9) coaxial with said longitudinal axis (A).

7. ATS according to claim 6, wherein said spacer element (8) comprises a plurality of bosses (10) configured to cooperate in contact with radial preload between said internal tubular element (4) and said external tubular element (5).

8. ATS according to one of the previous claims, comprising a terminal element (11) cooperating in contact on said second edge (5b) of said external tubular element (5) to separate said space (5') from said space (2).

9. ATS according to claim 8, wherein said terminal element (11) comprises a lid (12) comprising a radial portion (12a) configured to cooperate in contact with said external tubular element (5) and a shaped portion (12b) extending externally with respect to said external tubular element (5).

10. ATS according to claim 9, wherein said shaped portion (12b) is a sphere portion, where said sphere is centred on said longitudinal axis.

11. ATS according to one of the preceding claims, wherein said internal tubular element (4) defines a first plurality of openings (13') and a second plurality of openings (13"), said first plurality of openings (13') being formed in proximity to a second edge (4b), opposite said first edge (4a) along said longitudinal axis, and said second plurality of openings (13") being formed in an intermediate portion between said first plurality of openings (13') and said first edge (4a).

12. ATS according to claim 11, wherein said first plurality of openings (13') extends circumferentially entirely around said longitudinal axis (A) and said second plurality of openings (13") extends circumferentially over an angular range around said longitudinal axis (A).

13. ATS according to one of the preceding claims, wherein said external tubular element (5) defines a first plurality of openings (14') and a second plurality of openings (14"), said first and second pluralities of openings (14', 14") being made in an intermediate position between said first and second edges (5a, 5b).

14. ATS according to claim 13, wherein said first and second pluralities of openings (14', 14") extend circumferentially over an angular range around said longitudinal axis (A).

15. ATS according to claim 14, when dependent on claim 12, wherein said angular range of circumferential extension of said first and second pluralities of openings (14', 14") is offset with respect to the angular range of circumferential extension of said second plurality of openings (13") made on said internal tubular element.

16. ATS according to one of claims 13 to 15, wherein said first plurality of openings (14') comprises openings having an opening section that increases along said longitudinal axis from said second edge (5b) towards said first edge (5a).

17. ATS according to one of claims 13 to 16, wherein said first plurality of openings (14') comprises openings having a longitudinal distance along said axis (A) which varies increasing from said second edge (5b) towards said first edge (5a).

18. ATS according to one of claims 13 to 17, wherein said second plurality of openings (14") has a larger opening section than any opening of the first plurality of openings (14').

## Patentansprüche

1. Abgasnachbehandlungssystem, ATS, das einen Raum (2), der einem Arbeitsmodul des Nachbehandlungssystems zugewandt ist und einen Endabschnitt eines Kanals aufnimmt, und ein Modul zur Injektion einer Harnstofflösung in den Kanal stromaufwärts des Raums (2) definiert, wobei das ATS-System einen Mischer (1) umfasst, der in den Raum (2) aufgenommen und mit dem Kanal verbunden ist, der Mischer (1) einen Mischer (1) nach einem der vorhergehenden Ansprüche aufnimmt, der mit dem Kanal verbunden ist, der Mischer (1) ein internes rohrförmiges Element (4) und ein externes rohrförmiges Element (5) umfasst, die entlang einer Längsachse (A) verlaufen, und das externe rohrförmige Element (5) bemessen ist, um einen Raum (5') zu begrenzen, der zum Aufnehmen des internen rohrförmigen Elements (4) geeignet ist, wobei
das externe rohrförmige Element (5) eine erste Kante (5a), die konfiguriert ist, mit einem Endabschnitt des Kanals in Kontakt zusammenzuwirken, und eine zweite Kante (5b), die gegenüber der Ersten entlang der Längsachse (A) konfiguriert ist, um den Raum (5'), der durch das externe rohrförmige Element (5) begrenzt ist, vom Raum (2) zu trennen, umfasst,
**dadurch gekennzeichnet, dass** der Mischer (1) Folgendes umfasst:
ein Verbindungselement (6), das konfiguriert ist, mit dem externen rohrförmigen Element (5) und einer ersten Kante (4a) des internen rohrförmigen Elements (4) in Kontakt zusammenzuwirken, um eine direkte Fluidkommunikation lediglich zwischen einem Raum (4'), der durch das interne rohrförmige Element (4) begrenzt ist, und dem Kanal zu ermöglichen, wobei
das interne rohrförmige Element (4) mehrere Öffnungen (13) definiert, die konfiguriert sind, eine Fluidkommunikation zwischen dem Raum (4') des internen rohrförmigen Elements (4) und einem Abschnitt (5a') des Raums (5') zu ermöglichen, und
das externe rohrförmige Element (5) mehrere Öffnungen (14) definiert, die konfiguriert sind, eine Fluidkommunikation zwischen dem Abschnitt (5a') des Raums (5') und dem Raum (2) zu ermöglichen.

2. ATS nach Anspruch 1, wobei das interne rohrförmige Element (4) und das externe rohrförmige Element (5) entlang der Längsachse (A) koaxial sind.

3. ATS nach einem der Ansprüche 1 oder 2, wobei das interne rohrförmige Element (4) und das externe rohrförmige Element (5) zylindrisch sind.

4. ATS nach einem der Ansprüche 1 bis 3, wobei das Verbindungselement (6) einen Kegelring (7) umfasst.

5. ATS nach einem der vorhergehenden Ansprüche, das ferner ein Abstandshalterelement (8) umfasst, das konfiguriert ist, das interne rohrförmige Element (4) und das externe rohrförmige Element (5) radial getrennt zu halten.

6. ATS nach Anspruch 5, wobei das Abstandshalterelement (8) einen Ring (9) umfasst, der mit der Längsachse (A) koaxial ist.

7. ATS nach Anspruch 6, wobei das Abstandshalterelement (8) mehrere Vorsprünge (10) umfasst, die konfiguriert sind, mit einer radialen Vorbelastung zwischen dem internen rohrförmigen Element (4) und dem externen rohrförmigen Element (5) in Kontakt zusammenzuwirken.

8. ATS nach einem der vorhergehenden Ansprüche, das ein Anschlusselement (11) umfasst, das an der zweiten Kante (5b) des externen rohrförmigen Elements (5) in Kontakt zusammenwirkt, um den Raum (5') vom Raum (2) zu trennen.

9. ATS nach Anspruch 8, wobei das Anschlusselement (11) einen Deckel (12) umfasst, der einen radialen Abschnitt (12a) umfasst, der konfiguriert ist, mit dem externen rohrförmigen Element (5) und einem geformten Abschnitt (12b), der in Bezug auf das externe rohrförmige Element (5) außerhalb verläuft, in Kontakt zusammenzuwirken.

10. ATS nach Anspruch 9, wobei der geformte Abschnitt (12b) ein Kugelabschnitt ist und die Kugel auf die Längsachse zentriert ist.

11. ATS nach einem der vorhergehenden Ansprüche, wobei das interne rohrförmige Element (4) mehrere erste Öffnungen (13') und mehrere zweite Öffnungen (13") definiert, die mehreren ersten Öffnungen (13') in der Nähe einer zweiten Kante (4b), die der ersten Kante (4a) entlang der Längsachse gegenüberliegt, gebildet sind und die mehreren zweiten Öffnungen (13") in einem Zwischenabschnitt zwischen den mehreren ersten Öffnungen (13') und der ersten Kante (4a) gebildet sind.

12. ATS nach Anspruch 11, wobei die mehreren ersten Öffnungen (13') in Umfangsrichtung vollständig um die Längsachse (A) verlaufen und die mehreren zweiten Öffnungen (13") in Umfangsrichtung über einen Winkelbereich um die Längsachse (A) verlaufen.

13. ATS nach einem der vorhergehenden Ansprüche, wobei das externe rohrförmige Element (5) mehrere erste Öffnungen (14') und mehrere zweite Öffnungen (14") definiert und die mehreren ersten und zweiten Öffnungen (14', 14") in einer Zwischenposition zwischen der ersten und der zweiten Kante (5a, 5b) gebildet sind.

14. ATS nach Anspruch 13, wobei die mehreren ersten und zweiten Öffnungen (14', 14") in Umfangsrichtung über einen Winkelbereich um die Längsachse (A) verlaufen.

15. ATS nach Anspruch 14, wenn er von Anspruch 12 abhängt, wobei der Winkelbereich eines Verlaufs in Umfangsrichtung der mehreren ersten und zweiten Öffnungen (14', 14") in Bezug auf den Winkelbereich eines Verlaufs in Umfangsrichtung der mehreren zweiten Öffnungen (13"), die am internen rohrförmigen Element gebildet sind, versetzt ist.

16. ATS nach einem der Ansprüche 13 bis 15, wobei die mehreren ersten Öffnungen (14') Öffnungen umfassen, die einen Öffnungsabschnitt aufweisen, der entlang der Längsachse von der zweiten Kante (5b) zur ersten Kante (5a) zunimmt.

17. ATS nach einem der Ansprüche 13 bis 16, wobei die mehreren ersten Öffnungen (14') Öffnungen umfassen, die einen Längsabstand entlang der Achse (A) aufweisen, der von der zweiten Kante (5b) zur ersten Kante (5a) zunehmend variiert.

18. ATS nach einem der Ansprüche 13 bis 17, wobei die mehreren zweiten Öffnungen (14") einen größeren Öffnungsabschnitt aufweisen als jede Öffnung der mehreren ersten Öffnungen (14').

## Revendications

1. Système de post-traitement des gaz d'échappement, ATS, définissant un espace (2) tourné vers un module de fonctionnement dudit système de post-traitement et logeant une partie d'extrémité d'un conduit, et un module pour l'injection d'une solution d'urée dans ledit conduit en amont dudit espace (2), ledit système ATS comprenant un mélangeur (1) logé au sein dudit espace (2) et relié audit conduit, ledit mélangeur (1) logeant un mélangeur (1) selon l'une quelconque des revendications précédentes, relié audit conduit, ledit mélangeur (1) comprenant un élément tubulaire interne (4) et un élément tubulaire externe (5) s'étendant le long d'un axe longitudinal (A), ledit élément tubulaire externe (5) étant dimensionné pour délimiter un espace (5') adapté pour loger ledit élément tubulaire interne (4),
ledit élément tubulaire externe (5) comprenant un premier bord (5a) configuré pour coopérer en contact avec une partie d'extrémité dudit conduit et un deuxième bord (5b) opposé au premier le long dudit axe longitudinal (A) configuré pour séparer ledit espace (5') délimité par ledit élément tubulaire externe (5) dudit espace (2),
**caractérisé en ce que** ledit mélangeur (1) comprend un élément de liaison (6) configuré pour coopérer en contact avec ledit élément tubulaire externe (5) et un premier bord (4a) dudit élément tubulaire interne (4) pour permettre une communication fluidique directe uniquement entre un espace (4') délimité par ledit élément tubulaire interne (4) et ledit conduit,
ledit élément tubulaire interne (4) définissant une pluralité d'ouvertures (13) configurées pour permettre une communication fluidique entre ledit espace (4') dudit élément tubulaire interne (4) et une partie (5a') dudit espace (5'),
ledit élément tubulaire externe (5) définissant une pluralité d'ouvertures (14) configurées pour permettre une communication fluidique entre ladite partie (5a') dudit espace (5') et ledit espace (2).

2. ATS selon la revendication 1, dans lequel ledit élément tubulaire interne (4) et ledit élément tubulaire externe (5) sont coaxiaux le long dudit axe longitudinal (A) .

3. ATS selon l'une quelconque des revendications 1 ou 2, dans lequel ledit élément tubulaire interne (4) et ledit élément tubulaire externe (5) sont cylindriques.

4. ATS selon l'une quelconque des revendications 1 à 3, dans lequel ledit élément de liaison (6) comprend une bague conique (7).

5. ATS selon l'une quelconque des revendications précédentes, comprenant en outre un élément d'espacement (8) configuré pour maintenir ledit élément tubulaire interne (4) et ledit élément tubulaire externe (5) radialement séparés.

6. ATS selon la revendication 5, dans lequel ledit élément d'espacement (8) comprend une bague (9) coaxiale avec ledit axe longitudinal (A).

7. ATS selon la revendication 6, dans lequel ledit élément d'espacement (8) comprend une pluralité de bossages (10) configurés pour coopérer en contact avec précharge radiale entre ledit élément tubulaire interne (4) et ledit élément tubulaire externe (5).

8. ATS selon l'une quelconque des revendications précédentes, comprenant un élément terminal (11) coopérant en contact sur ledit deuxième bord (5b) dudit élément tubulaire externe (5) pour séparer ledit espace (5') dudit espace (2).

9. ATS selon la revendication 8, dans lequel ledit élément terminal (11) comprend un couvercle (12) comprenant une partie radiale (12a) configurée pour coopérer en contact avec ledit élément tubulaire externe (5) et une partie façonnée (12b) s'étendant extérieurement par rapport audit élément tubulaire externe (5).

10. ATS selon la revendication 9, dans lequel ladite partie façonnée (12b) est une partie formant sphère, où ladite sphère est centrée sur ledit axe longitudinal.

11. ATS selon l'une quelconque des revendications précédentes, dans lequel ledit élément tubulaire interne (4) définit une première pluralité d'ouvertures (13') et une deuxième pluralité d'ouvertures (13''), ladite première pluralité d'ouvertures (13') étant formée à proximité d'un deuxième bord (4b), opposé audit premier bord (4a) le long dudit axe longitudinal, et ladite deuxième pluralité d'ouvertures (13") étant formée dans une partie intermédiaire entre ladite première pluralité d'ouvertures (13') et ledit premier bord (4a).

12. ATS selon la revendication 11, dans lequel ladite première pluralité d'ouvertures (13') s'étend de manière circonférentielle entièrement autour dudit axe longitudinal (A) et ladite deuxième pluralité d'ouvertures (13") s'étend de manière circonférentielle sur une plage angulaire autour dudit axe longitudinal (A) .

13. ATS selon l'une quelconque des revendications précédentes, dans lequel ledit élément tubulaire externe (5) définit une première pluralité d'ouvertures (14') et une deuxième pluralité d'ouvertures (14''), lesdites première et deuxième pluralités d'ouvertures (14', 14") étant faites dans une position intermédiaire entre lesdits premier et deuxième bords (5a, 5b).

14. ATS selon la revendication 13, dans lequel lesdites première et deuxième pluralités d'ouvertures (14', 14") s'étendent de manière circonférentielle sur une plage angulaire autour dudit axe longitudinal (A).

15. ATS selon la revendication 14, lorsqu'elle dépend de la revendication 12, dans lequel ladite plage angulaire d'extension circonférentielle desdites première et deuxième pluralités d'ouvertures (14', 14") est décalée de la plage angulaire d'extension circonférentielle de ladite deuxième pluralité d'ouvertures (13'') faites sur ledit élément tubulaire interne.

16. ATS selon l'une quelconque des revendications 13 à 15, dans lequel ladite première pluralité d'ouvertures (14') comprend des ouvertures présentant une section d'ouverture qui augmente le long dudit axe longitudinal dudit deuxième bord (5b) en direction dudit premier bord (5a).

17. ATS selon l'une quelconque des revendications 13 à 16, dans lequel ladite première pluralité d'ouvertures (14') comprend des ouvertures présentant une distance longitudinale le long dudit axis (A) qui varie en augmentant dudit deuxième bord (5b) en direction dudit premier bord (5a).

18. ATS selon l'une quelconque des revendications 13 à 17, dans lequel ladite deuxième pluralité d'ouvertures (14") présente une section d'ouverture plus grande que toute ouverture de la première pluralité d'ouvertures (14').
